# EUROPEAN PATENT APPLICATION

(11) **EP 1 712 294 A1**
(43) Date of publication of application: **18.10.2006**
(21) Application number: 06111658.8
(22) Date of filing: 23.03.2006
(51) Int. Cl.: B05B 12/12, B05B 13/04

(54) **Method for painting an object, and corresponding paint plant**

(30) Priority: 13.04.2005 IT MI20050627
(71) Applicant: ABB Service S.r.l, 20124 Milano (IT)
(72) Inventor: Calvetto, Massimo, I-10015, Ivrea (TO) (IT); Villata, Mauro, I-10093, Collegno (TO) (IT)
(74) Representative: Giavarini, Francesco

(57) **Abstract**

A method for painting an object using at least one robotized unit operatively associated to a control unit. The method comprises the following steps: (a) acquiring information regarding characteristics of said object; (b) according to said acquired information, generating directly in real time in processing means at least one sequence of instructions executable directly by said control unit; (c) transferring said sequence of instructions to said control unit; (d) executing said sequence of instructions, actuating said robotized unit for painting at least part of said object.

## Description

The present invention relates to a method for painting objects and a corresponding paint plant which present improved functions and characteristics.

As is known, it is increasingly common to resort, for painting objects, to automated plants making use of robotized units.

The advantages of the use of robotized units are numerous. Amongst these may be cited rate of execution, flexibility, constancy of the painting quality, and saving of paint. Furthermore, the use of robotized plants enables prevention of the employment of staff in areas such as the ones where paints and solvents are directly used that could constitute a risk for the health of the operators.

It is known that one of the main problems in the field of painting with robotized plants is constituted by the step of programming the robotized unit. This in general consists in the supply to said robotized units of commands for carrying out painting of a specific object. Said commands comprise instructions on how the various mechanical parts constituting the robotized units are to move with respect to the object to be painted, as well as further instructions specifically linked to painting parameters, such as the flow rate of air and/or paint to be used during painting.

Different approaches are currently known for execution of said programming step. Amongst these, a first known method consists in indicating numerically, via an appropriate operator interface, which positions or angles certain key parts of the robotized unit are to assume at specific instants of time. During execution of the program, the robotized unit will move on paths obtained generally by interpolation with respect to the points fixed in the programming step.

A second known method for execution of said programming step, which is applicable especially in the case of robots of an anthropomorphic type, requires an operator to guide the end of the arm of the robotized unit along the paths that are to be followed during painting, in effect simulating painting of an object. The robotized system stores said paths, which are then optimized and complemented with information on the painting parameters mentioned previously for generating the painting program.

A third known method for execution of said programming step requires the use of a computer-aided-design (CAD) tool, i.e., of a software tool capable of displaying on a screen a representation, typically a three-dimensional one, of the object to be painted, frequently together with a representation of the robotic unit, and the painting is simulated in the virtual space thus represented, generating a program that must then be tested and validated on a real robotized cell before being used.

Each of the methods listed above presents an intrinsic complexity of its own and in some cases involves extremely long operating times, which can vary from hours up to days or weeks for very complex objects, for programming of the robotic units whenever it is necessary to configure the plant for painting a new type of object, which is each time different as regards shape and/or dimensions from the previous ones. In other cases, a painting program is executed that is far from precise, with consequent poor quality and waste of paint.

The problem then becomes even more critical if the production envisages that the same paint plant should enable painting of pieces of a different type and that said pieces should arrive at the paint plant without any pre-set order. Not infrequent is the case of plants to be configured for painting several hundreds of pieces of different types. In these cases, the step of programming the robotized unit becomes extremely complex, it being necessary to envisage generation in advance of the hundreds of different programs for the various types of objects, storage of said programs in the control unit of the robotized unit, and then selective activation in real time of said programs according to the object that each time is to be painted. A simplification, which is, however, not satisfactory, consists in the generation of a smaller number of parametric programs, all typically to be pre-stored in the control unit of the robotized unit, and in the selective activation of said programs with the appropriate parameterization, as the different pieces to be painted are submitted to the paint plant.

The known methods in effect cause a fair part of the advantages of flexibility that would, *a priori,* characterize the use of robotized units to be lost, in so far as no object for which a painting program has not already been provided off-line can be submitted for painting.

A primary task of the present invention is to provide a painting method and a paint plant that will enable the drawbacks referred to above to be overcome.

In the framework of this task, a purpose of the present invention is to provide a painting method and a paint plant that will enable generation of the painting program in real time starting directly from the object to be painted.

Yet a further task of the present invention is to provide a painting method and a paint plant that present high flexibility.

A further task of the present invention is to provide a painting method and a paint plant that will guarantee high levels of painting quality and lower consumption of paint, with consequent contained emissions and lower environmental impact.

The above task, as well as the above and other purposes that will appear more clearly from what follows, are achieved by a method for painting an object using at least one robotized unit operatively associated to a control unit, said method being characterized in that it comprises the following steps:
(a) acquiring information regarding characteristics of said object;
(b) according to said acquired information, generating directly in real time in processing means at least one sequence of instructions executable directly by said control unit;
(c) transferring said sequence of instructions to said control unit; and
(d) executing said sequence of instructions, actuating said robotized unit for painting at least part of said object.

The above task, as well as the pre-set purposes, are achieved also by a plant for painting an object, according to what is defined in the corresponding claims.

Further characteristics and advantages will emerge more clearly evident from the description of preferred, but not exclusive, embodiments of the method and of the plant according to the invention, illustrated by way of indicative and non-limiting example in the annexed plate of drawings, in which:
- Figure 1 is a schematic illustration of an embodiment of a plant according to the invention;
- Figure 2 illustrates an example representing a step of execution of the method according to the invention; and
- Figure 3 illustrates an anthropomorphic robot, which can be used in a preferred embodiment of the plant according to the invention.

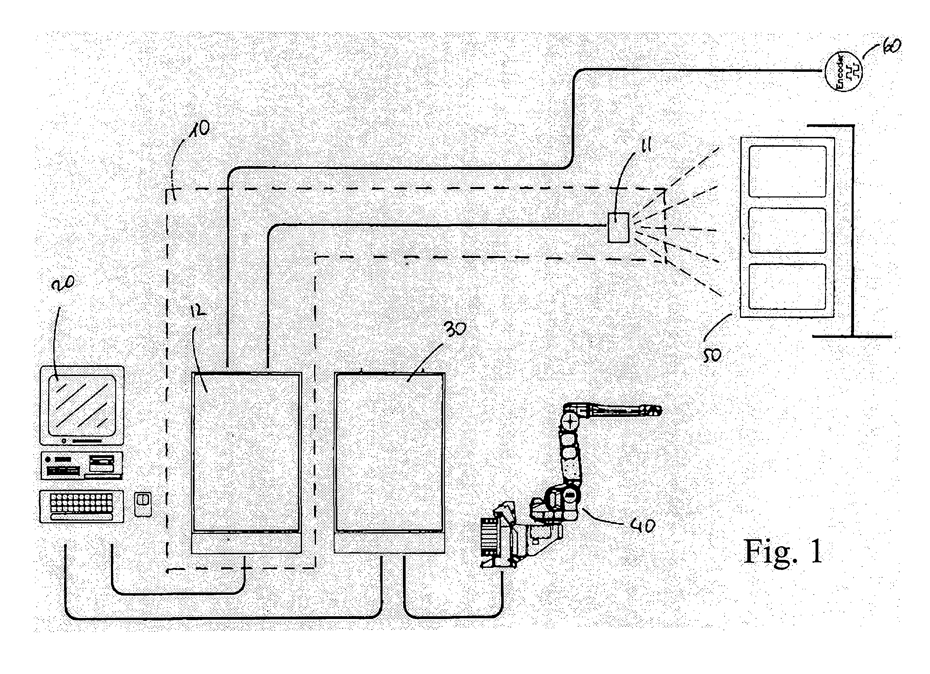

With reference to the above figures, the method according to the invention comprises a first step (a) in which information is acquired regarding characteristics of an object 50 that is to be painted. Advantageously, said information regards principally the external "appearance" of the object and is acquired by means of an interface unit, designated in Figure 1 by the reference number 10. Preferably, said step (a) comprises the total, or even partial, scanning of the object to be painted, using a laser scanner. Alternatively, it is possible to acquire a digital image by means of digital cameras or equivalent devices.

On the basis of said acquired information, the method according to the invention envisages a step (b), in which at least one sequence of instructions is generated directly, in appropriate processing means 20. Said means 20 preferably comprise one or more microprocessor devices, such as personal computers or equivalent devices.

Said sequence of instructions, typically a portion of software code, is executable directly by a control unit 30 of at least one robotized unit 40, to which said sequence is transferred in a subsequent step (c). Next, in a step (d), the robotized unit 40 is actuated for carrying out painting of at least part of the object 50.

Advantageously, step (b) is executed in real time. By the expression "in real time" is meant that said sequence of instructions is generated at the moment in which the object to be painted is introduced on the line, with operating times that are compatible with the industrial criteria of mass production. In practice, when a type of piece traverses the paint plant, a corresponding painting program is generated. The object is painted with execution of said program, and then the process passes on to the next piece. If objects of a different type follow one another, for each type a new program will be generated and executed in real time on the basis of the information acquired in step (a). The generation referred to above then does not occur, as is the case of known methods, off line, but in the course of a step inserted, in real time, in the production process, and without any need to have pre-compiled programs. In addition, the program can be advantageously stored only for the time necessary for painting and then can possibly be erased.

Advantageously, once said information regarding the object 50 to be painted has been acquired, there is executed a step (b1) in which said information is processed for preferably deriving geometrical characteristics of the object to be painted, such as for example the perimetral shape, dimensions, shapes of the various portions, etc. Said step (b1) can be carried out, preferably, in a completely automatic way in said processing means 20. Alternatively, there may be envisaged a step in which input data is entered at input to the processing means, for instance by an operator. It is particularly advantageous to associate the object to be painted to a family of objects that has been previously defined, said association being functional as regards the generation of the sequence of instructions. Preferably, the association to a family of objects can also be executed automatically, for instance by the processing means 20 themselves.

The determination of said geometrical characteristics and/or the association to a family of objects, significantly simplifies the procedure of generation of the sequence of instructions, which can thus be essentially based upon the knowledge developed of said geometrical characteristics.

Preferably, step (b1) comprises determining two-dimensional geometrical characteristics of the object 50, amongst which, advantageously, "full areas" (typically to be painted) and "empty areas" (typically not to be painted). The sequence of instructions will thus be generated accordingly. Said aspect is particularly important and advantageous in the case where the object to be painted has a substantially two-dimensional development, as for example in the case of doors or windows, or door-frames or window-frames in general.

Furthermore, step (b) of generation of the sequence of instructions can usefully comprise also selecting specific painting parameters, at times referred to by persons skilled in the branch by the term "paintbrush", that are important for proper painting of the object; said parameters can advantageously comprise among other things "atomization air", "fanned air", "product flow rate and pressure", and other possible parameters.

Finally, step (b) can moreover comprise generating the sequence of instructions so that said sequence will be suited to controlling at least one robotized unit of an anthropomorphic type.

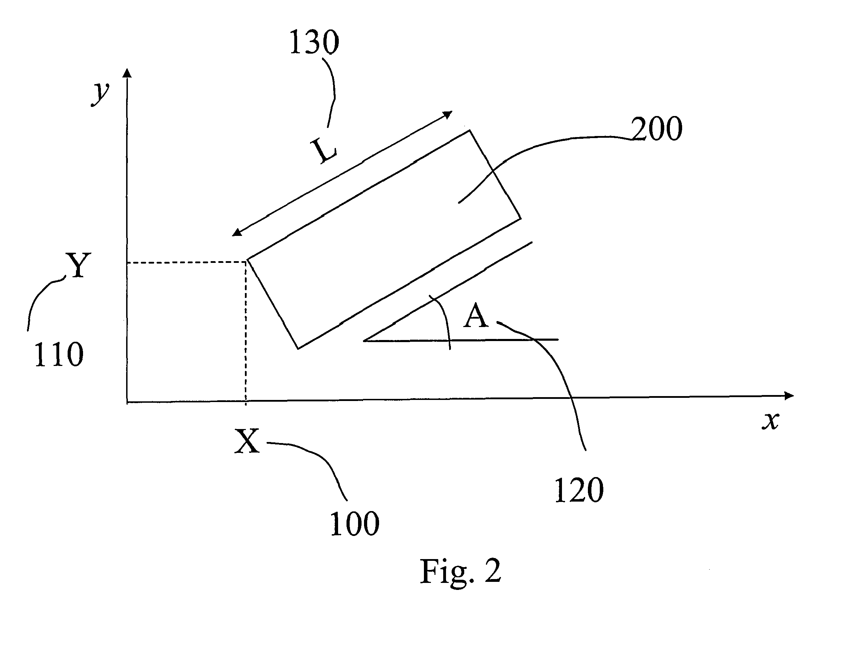

With reference to Figure 2, the method according to the invention will now be illustrated with reference to its application, for instance for painting a door-frame or window-frame, without thereby wishing in any way to limit the possible field of application thereof. According to a possible embodiment, the method according to the invention envisages that painting will be approximately divided into two passes. In the first pass a painting path is executed with angles of paint-gun inclination, measured with respect to the normal of the surface to be painted, of 0°. In the second pass, a path is executed first on the outer perimeter and subsequently on the inner perimeters. According to the type of door-frame or window-frame, in this case a command is sent for appropriate inclination of the gun. In all cases, also the characteristics of the so-called "paintbrush" are sent to the robotized unit.

In practice, the system as a whole performs the following operations:
- scanning of the door-frame or window-frame so as to obtain an image and loading thereof into the data-processing memory of the processing means;
- division of the door-frame or window-frame into first-pass regular rectangular polygons (200);
- transmission to the robotized unit of instructions containing the set of the origin co-ordinates X (100) and Y (110), the length L (130), the inclination A (140) with respect to the axis x of each polygon, the value of inclination of the gun (measured with respect to the normal of the surface to be painted) B=0, and the "paintbrush" (which depends upon the surface of the polygon to be painted), in order to carry out a first painting pass;
- derivation of the profiles of the outer perimeter of the door-frame or window-frame;
- transmission to the robotized unit of instructions containing the set of the origin co-ordinates X (100) and Y (110), the length L (130), the inclination A (140) with respect to the axis x of each polygon constituting the perimeter, the inclination of the gun B (measured with respect to the normal of the surface to be painted), and the "paintbrush" for carrying out painting of the outer perimeter;
- derivation of the profiles of the inner perimeters of the door-frame or window-frame;
- transmission to the robotized unit of the set of the origin co-ordinates X (100) and Y (110), the length L (130), the inclination A (140) with respect to the axis x of each polygon constituting the inner perimeters, the inclination of the gun B (measured with respect to the normal of the surface to be painted), and the "paintbrush" for carrying out painting of the inner perimeters.
   Clearly, it emerges from this non-limiting example how the application of said method can envisage that the sequence of steps of type (a), (b) (c) and (d) can be repeated several times for painting a single object. It is also possible to use different sequences and also different references according to the object to be painted. For example, first all of the profiles (front, outer and inner perimeters) are derived, and then the program to be sent to the robotized unit for execution is generated.

In practice, according to a particularly advantageous embodiment of the method according to the invention, step (b) can envisage the generation in real time of a plurality of sequences of instructions that are distinct and separate from one another. Said sequences of instructions, each of which corresponding in practice to a portion of software code, can be executed in any desired order. In particular, they can be generated, transferred to the control unit 30, and executed by the robotized unit 40, in a separate and independent way (i.e., as programs separate from one another) or else can be pre-associated to one another in the desired sequence and so give rise to a single program executed by the unit 30 in a single block.

In many paint plants, the objects to be painted are associated to a moving paint line (for instance, a cradle). In such cases, the method according to the invention advantageously envisages that in step (b) the generation of the sequence of instructions will take into account and/or comprise parameters that are a function of the speed of said paint line.

The method according to the invention can be applied for creation of a wide range of paint plants. Consequently, a further subject of the present invention is a plant for painting an object 50, of the type comprising at least one robotized unit 40 operatively associated to a control unit 30, said plant being characterized in that it comprises:
- an interface unit 10 designed to acquire information regarding the object to be painted; and
- processing means 20, such as one or more microprocessor devices, designed to generate directly and in real time, on the basis of said information, at least one sequence of instructions, executable directly by said control unit, so as to actuate said robotized unit for painting at least part of said object.
   As previously described, the interface unit 10 can comprise different types of devices; preferably a laser scanner or means for the acquisition of a digital image of at least part of said object to be painted will be used, such as for example digital cameras.

According to one embodiment of the invention, the interface unit 10 is preferably structured in two modules: a first module comprises a scanning device based upon a laser measuring device 11 with mobile mirror deflection means, and a second module comprises a scanning microcomputer 12.

The movement of the deflection means is generated using a stepper motor.

In a possible embodiment, the beam of the measuring device, in the absence of the object on which to carry out scanning, can be directed against a reference plate, on which to carry out also the instrumental resetting of the system.

The scanning microcomputer 12 manages the following functions:
- reception of pulses from a purposely designed line encoder 60 for determination and measurement of the movement of the line;
- driving of the scanning device 11 synchronised with the movement of the paint line;
- acquisition of the scanning data and formation of the image of the object on the cradle; and
- transmission of the image to the processing unit 20.

The processing means 20 may advantageously comprise means for determination in real time of geometrical characteristics of the object to be painted. Said means can be represented, for instance, by a microprocessor unit programmed so that, among the various functions, it will perform also that of determining in real time geometrical characteristics of the object to be painted. In the case of substantially two-dimensional objects, advantageously it is possible for instance, as illustrated previously, to determine two-dimensional geometrical characteristics of said object, such as "full areas" (typically to be painted) and "empty areas" (typically not to be painted).

In the case where the objects to be painted are positioned on a purposely provided cradle, this can be hooked to a conveyor, the speed of which is detected and measured using a bi-directional incremental line encoder 60 connected to the scanning microcomputer 12. The conveyor is controlled by the robotized painting unit 40, which stops it in an appropriate position for painting. Once activated, the robotized unit 40 (via its control unit) carries out painting of the part in view of the object. At the end of this operation, it activates the conveyor for rotation of the cradle. At the end of rotation, it carries out painting of the new part, and finally it enables the conveyor for emptying the cradle.

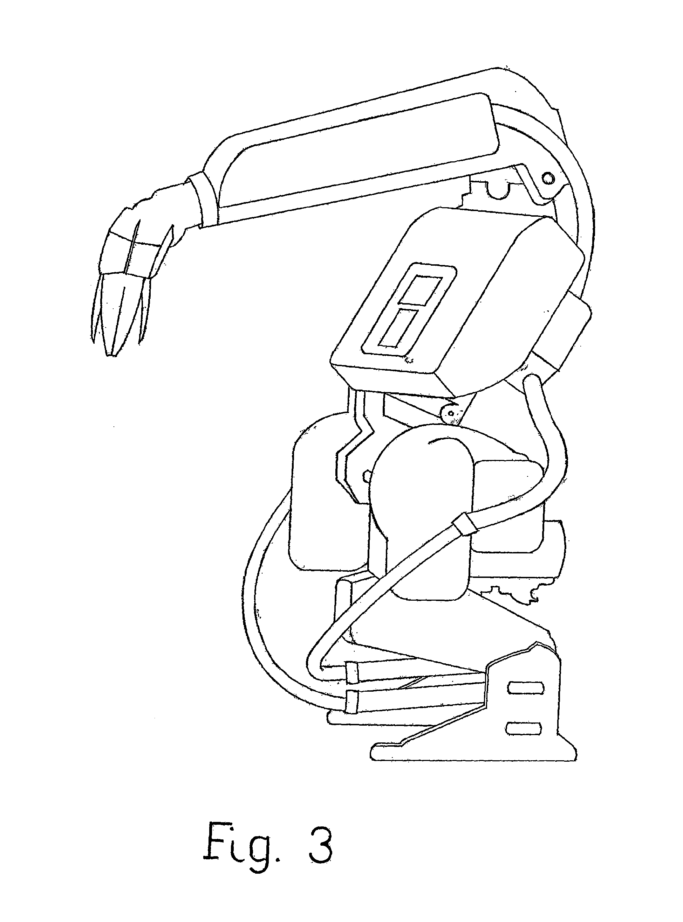

The method and plant according to the invention can refer to plants comprising one or more robotic units of various mechanical structures. Advantageously, in a preferred embodiment of a plant according to the invention, it is possible to use at least one industrial robotized unit of an anthropomorphic type illustrated in Figure 3 and designated by the reference number 400, i.e., a mechanical manipulator or arm that comprises a number of joints connected mechanically to one another via mechanical connection elements so that at least two of said elements are connected in series and at least one of them has a free end. In the field of painting, typically associated to said free end are means for spraying painting products on the object to be painted. A typical case of anthropomorphic robotized unit is that of the robotized unit with six degrees of freedom, such as the robotized unit of the series IRB produced by ABB. The use of the method and of the plant according to the invention with a robotized unit of an anthropomorphic type enables significant levels of flexibility of application to be achieved.

It has in practice been noted how the method as well as the plant according to the invention will enable the pre-set task and purposes to be achieved, providing a series of significant advantages as compared to the known art.

In particular, the method and the plant according to the invention enable automation either in all or in part of the step of programming of the robotized unit, with a considerable saving of time, guaranteeing the precision, quality and repeatability typical of automated processes. In particular, the amount of painting product used can be reduced with respect to manual methods thanks to an appropriate automatic or semiautomatic selection of the painting parameters and of the path to be followed by the robotized unit during painting.

The method and the plant according to the invention guarantee high flexibility thanks to the automation of the step of programming of the robotized unit, which means that it is not necessary to provide *a priori* any type of program for any type of object to be painted.

The method and the plant thus devised may undergo numerous modifications and variations, all tailing within the field of the inventive idea. In addition, all of the details may be replaced by other technically equivalent elements. In practice, the materials, as well as the dimensions, may be any whatsoever according to the requirements and the state of the art.

## Claims

1. A method for painting an object using at least one robotized unit operatively associated to a control unit, said method being **characterized in that** it comprises the following steps: (a) acquiring information regarding characteristics of said object; (b) according to said acquired information, generating directly in real time in processing means at least one sequence of instructions executable directly by said control unit; (c) transferring said sequence of instructions to said control unit; (d) executing said sequence of instructions, actuating said robotized unit for painting at least part of said object.

2. The method according to Claim 1, **characterized in that** said step (b) comprises generating directly in said processing means a plurality of sequences of instructions executable directly by said control unit in any desired order.

3. The method according to Claim 1, **characterized in that** said step (a) comprises scanning said object to be painted using a laser scanner.

4. The method according to Claim 1, **characterized in that** said step (a) comprises the acquisition of a digital image of at least part of said object to be painted.

5. The method according to one or more of the preceding claims, **characterized in that** said step (b) comprises the step (b1) of deriving geometrical characteristics of said object on the basis of said information.

6. The method according to Claim 5, **characterized in that** said step (b1) comprises deriving two-dimensional geometrical characteristics of said object.

7. The method according to Claim 6, **characterized in that** said step (b1) comprises determining full areas and empty areas of said object.

8. The method according to Claim 7, **characterized in that** said step (b1) is executed automatically in said processing means.

9. The method according to one or more of the preceding claims, **characterized in that** said step (b) comprises associating said object to be painted to a predetermined family of objects.

10. The method according to one or more of the preceding claims, **characterized in that** said step (b) comprises selecting specific painting parameters.

11. The method according to one or more of the preceding claims, **characterized in that** said step (b) comprises generating said sequence of instructions so as to comprise parameters that are a function of the rate of movement of the paint line to which said object is associated.

12. The method according to one or more of the preceding claims, **characterized in that** said step (b) comprises generating said sequence of instructions so that this will be suited to controlling at least one robotized unit of an anthropomorphic type.

13. A plant for painting an object, of the type comprising at least one robotized unit operatively associated to a control unit, said plant being **characterized in that** it comprises:
- an interface unit designed to acquire information regarding the object to be painted; and
- processing means designed to generate in real time, on the basis of said acquired information, at least one sequence of instructions executable directly by said control unit so as to actuate said robotized unit for painting at least part of said object.

14. The plant according to Claim 13, **characterized in that** said interface unit comprises at least one laser scanner.

15. The plant according to Claim 13, **characterized in that** said interface unit comprises means for the acquisition of a digital image of at least part of said object to be painted.

16. The plant according to Claim 13, **characterized in that** said interface unit comprises a laser-measuring scanning device and a scanning microcomputer.

17. The plant according to Claim 16, **characterized in that** it comprises a bi-directional encoder operatively associated to said scanning microcomputer and designed to supply information regarding the movement of the paint line.

18. The plant according to Claim 13, **characterized in that** said processing means comprise:
- means for determining in real time, on the basis of said acquired information, geometrical characteristics of said object to be painted;
- means for generating in real time, on the basis of said geometrical characteristics, at least one sequence of instructions executable directly by said control means.

19. The plant according to Claim 18, **characterized in that** said means for determining in real time geometrical characteristics of the object to be painted comprise means for determining two-dimensional geometrical characteristics of said object.

20. The plant according to one or more of the preceding claims, **characterized in that** said robotized unit comprises at least one robotized unit of an anthropomorphic type.
